# EUROPEAN PATENT APPLICATION

(11) **EP 2 296 072 A2**
(43) Date of publication of application: **16.03.2011**
(21) Application number: 10170224.9
(22) Date of filing: 21.07.2010
(51) Int. Cl.: G05D 1/02

(54) **Asymmetric stereo vision system**

(30) Priority: 18.08.2009 US 543127; 18.08.2009 US 543176; 18.08.2009 US 543152
(71) Applicant: Deere & Company, Moline, IL 61265-8098 (US)
(72) Inventor: Anderson, Noel W., Fargo, ND 58102 (US)
(74) Representative: Holst, Sönke

(57) **Abstract**

An apparatus includes an autonomous vehicle (102), a modular navigation system (112), and an asymmetric vision module (700). The modular navigation system (112) is coupled to the autonomous vehicle (102). The asymmetric vision module (700) is configured to interact with the modular navigation system (112).

## Description

### Field of the Invention

The present invention relates generally to systems and methods for navigation and more particularly to systems and methods for mobile robotic navigation. Still more specifically, the present disclosure relates to a method and system for asymmetric stereo vision.

### Background of the Invention

The use of robotic devices to perform physical tasks has increased in recent years. Mobile robotic devices can be used to perform a variety of different tasks. These mobile devices may operate in semi-autonomous or fully autonomous modes. Some robotic devices are constrained to operate in a contained area, using different methods to obtain coverage within the contained area. These robotic devices typically have an integrated, fixed positioning and navigation system. Mobile robotic devices often rely on dead reckoning or use of a global positioning system to achieve area coverage. These systems tend to be inefficient and are often cost-prohibitive.

### Summary

One or more of the different illustrative embodiments provide an apparatus that includes an autonomous vehicle, a modular navigation system, and an asymmetric vision module. The modular navigation system is coupled to the autonomous vehicle. The asymmetric vision module is configured to interact with the modular navigation system.

The different illustrative embodiments further provide an apparatus that includes a processor unit, a behavior database, a system interface, and a number of asymmetric cameras. The processor unit is configured to perform vision based positioning and navigation. The behavior database is configured to be accessed by the processor unit. The system interface is coupled to the processor unit and configured to interact with a modular navigation system.

The different illustrative embodiments further provide a method for robotic navigation. A task is received to complete in a worksite. A number of behaviors are accessed from a behavior database using a processor unit. A number of images are obtained from a number of cameras using the processor unit. The task is performed using the number of behaviors and the number of images.

### Embodiment

The features, functions, and advantages can be achieved independently in various embodiments of the present invention or may be combined in yet other embodiments in which further details can be seen with reference to the following description and drawings, in which:
Figure 1 is a block diagram of a worksite environment in which an illustrative embodiment may be implemented;
Figure 2 is a block diagram of a data processing system in accordance with an illustrative embodiment;
Figure 3 is a block diagram of a modular navigation system in accordance with an illustrative embodiment;
Figure 4 is a block diagram of a mobility system in accordance with an illustrative embodiment;
Figure 5 is a block diagram of a sensor system in accordance with an illustrative embodiment;
Figure 6 is a block diagram of a behavior database in accordance with an illustrative embodiment;
Figure 7 is a block diagram of an asymmetric vision module in accordance with an illustrative embodiment;
Figure 8 is a block diagram of an autonomous vehicle in accordance with an illustrative embodiment;
Figure 9 is a block diagram of an asymmetric vision system behavior in accordance with an illustrative embodiment;
Figure 10 is a block diagram of an asymmetric vision system behavior in accordance with an illustrative embodiment;
Figure 11 is a block diagram of an asymmetric vision system behavior in accordance with an illustrative embodiment;
Figure 12 is a block diagram of an asymmetric vision system behavior in accordance with an illustrative embodiment;
Figure 13 is a flowchart illustrating a process for operating an asymmetric vision system in accordance with an illustrative embodiment;
Figure 14 is a flowchart illustrating a process for landmark navigation in accordance with an illustrative embodiment; and
Figure 15 is a flowchart illustrating a process for landmark localization in accordance with an illustrative embodiment.

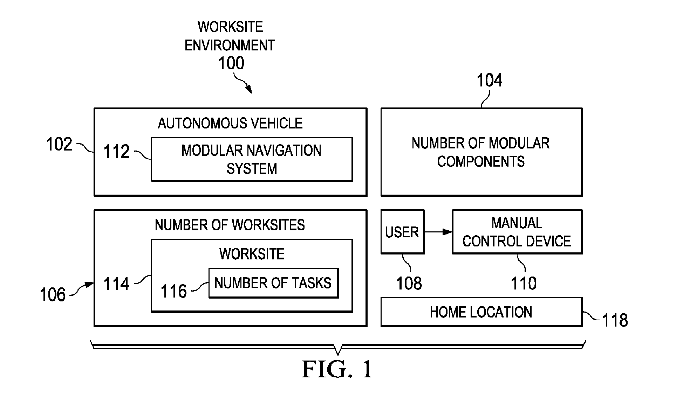

With reference to the figures and in particular with reference to Figure 1, a block diagram of a worksite environment is depicted in which an illustrative embodiment may be implemented. Worksite environment 100 may be any type of worksite environment in which an autonomous vehicle can operate. In an illustrative example, worksite environment 100 may be a structure, building, worksite, area, yard, golf course, indoor environment, outdoor environment, different area, change in needs of a user, and/or any other suitable worksite environment or combination of worksite environments.

As an illustrative example, a change in the needs of a user may include, without limitation, a user moving from an old location to a new location and operating an autonomous vehicle in the yard of the new location, which is different than the yard of the old location. As another illustrative example, a different area may include, without limitation, operating an autonomous vehicle in both an indoor environment and an outdoor environment, or operating an autonomous vehicle in a front yard and a back yard, for example.

Worksite environment 100 may include autonomous vehicle 102, number of modular components 104, number of worksites 106, user 108, and manual control device 110. As used herein, a number of items means one or more items. For example, number of modular components 104 is one or more modular components. Autonomous vehicle 102 may be any type of autonomous vehicle including, without limitation, a mobile robotic machine, a service robot, a robotic mower, a robotic snow removal machine, a robotic vacuum, and/or any other autonomous vehicle. Autonomous vehicle 102 includes modular navigation system 112. Modular navigation system 112 controls the mobility, positioning, and navigation for autonomous vehicle 102.

Number of modular components 104 is compatible and complementary modules to modular navigation system 112. Number of modular components 104 provides upgraded capabilities, or enhancements, to modular navigation system 112 of autonomous vehicle 102.

Number of worksites 106 may be any area within worksite environment 100 that autonomous vehicle 102 can operate. Each worksite in number of worksites 106 may be associated with a number of tasks. Worksite 114 is an illustrative example of one worksite in number of worksites 106. Worksite 114 includes number of tasks 116. Autonomous vehicle 102 may operate to perform number of tasks 116 within worksite 114. As used herein, number refers to one or more items. In one illustrative example, number of worksites 106 may include, without limitation, a primary yard and a secondary yard. The primary yard may be worksite 114, associated with number of tasks 116. The secondary yard may be associated with another set of tasks, for example.

User 108 may be, without limitation, a human operator, a robotic operator, or some other external system. Manual control device 110 may be any type of manual controller, which allows user 108 to override autonomous behaviors and control autonomous vehicle 102. In an illustrative example, user 108 may use manual control device 110 to control movement of autonomous vehicle 102 from home location 118 to worksite 114 in order to perform number of tasks 116.

The illustration of worksite environment 100 in Figure 1 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

The different illustrative embodiments recognize and take into account that currently used methods for robotic navigation often use a very primitive, random navigation system. This random navigation system works within a perimeter established by a wire carrying an electrical signal. The robotic machines in currently used methods may be equipped with an electrical signal detector and a bumper switch on the body of the machine. These machines move in a generally straight direction until they either detect the signal from the perimeter wire or a bumper switch is closed due to contact of the machine with an external object. When either of these two situations occurs, these machines change direction. As a result, current methods constrain the machine within a work area perimeter and maintain movement after contact with external objects.

The different illustrative embodiments further recognize and take into account that currently used systems for robotic navigation are fixed systems integrated into a robotic machine. These fixed systems may include advanced sensors for positioning and navigation, which allows for more efficient and precise coverage, but also increases the expense of the robotic machine by hundreds or thousands of dollars above the price of a robotic machine with basic, random navigation systems. Robotic navigation refers to robotic movement, positioning, and localization.

The different illustrative embodiments further recognize and take into account that currently used vision systems for vehicle navigation require symmetry in the camera sensor resolution and the field of view to the vehicle. Fixed camera sensors are used, and an additional mechanism may be employed to provide mobility to the camera head. The mobility is limited to the mechanism used to turn the camera head, and is typically limited to a precisely known angle relative to the vehicle.

Thus, one or more of the different illustrative embodiments provide an apparatus that includes an autonomous vehicle, a modular navigation system, and an asymmetric vision module. The modular navigation system is coupled to the autonomous vehicle. The asymmetric vision module is configured to interact with the modular navigation system.

The different illustrative embodiments further provide an apparatus that includes a processor unit, a behavior database, a system interface, and a number of asymmetric cameras. The processor unit is configured to perform vision based positioning and navigation. The behavior database is configured to be accessed by the processor unit. The system interface is coupled to the processor unit and configured to interact with a modular navigation system.

The different illustrative embodiments further provide a method for robotic navigation. A task is received to complete in a worksite. A number of behaviors are accessed from a behavior database using a processor unit. A number of images are obtained from a number of cameras using the processor unit. The task is performed using the number of behaviors and the number of images.

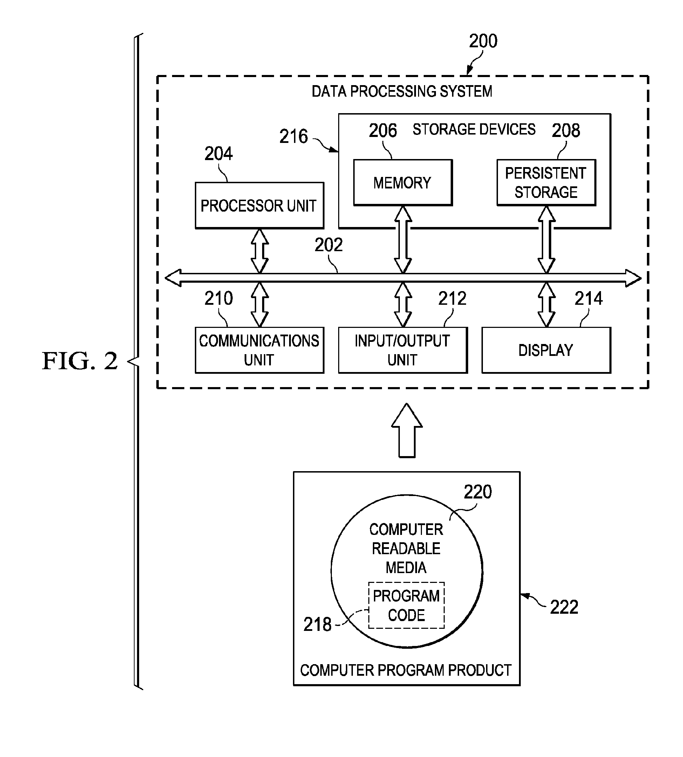

With reference now to Figure 2, a block diagram of a data processing system is depicted in accordance with an illustrative embodiment. Data processing system 200 may be used to implement different computers and data processing systems within a worksite environment, such as modular navigation system 112 in Figure 1.

In this illustrative example, data processing system 200 includes communications fabric 202, which provides communications between processor unit 204, memory 206, persistent storage 208, communications unit 210, input/output (I/O) unit 212, and display 214. Depending on the particular implementation, different architectures and/or configurations of data processing system 200 may be used.

Processor unit 204 serves to execute instructions for software that may be loaded into memory 206. Processor unit 204 may be a set of one or more processors or may be a multi-processor core, depending on the particular implementation. Further, processor unit 204 may be implemented using one or more heterogeneous processor systems in which a main processor is present with secondary processors on a single chip. As another illustrative example, processor unit 204 may be a symmetric multi-processor system containing multiple processors of the same type.

Memory 206 and persistent storage 208 are examples of storage devices 216. A storage device is any piece of hardware that is capable of storing information, such as, for example without limitation, data, program code in functional form, and/or other suitable information either on a temporary basis and/or a permanent basis. Memory 206, in these examples, may be, for example, a random access memory or any other suitable volatile or non-volatile storage device. Persistent storage 208 may take various forms depending on the particular implementation. For example, persistent storage 208 may contain one or more components or devices. For example, persistent storage 208 may be a hard drive, a flash memory, a rewritable optical disk, a rewritable magnetic tape, or some combination of the above. The media used by persistent storage 208 also may be removable. For example, a removable hard drive may be used for persistent storage 208.

Communications unit 210, in these examples, provides for communications with other data processing systems or devices. In these examples, communications unit 210 is a network interface card. Communications unit 210 may provide communications through the use of either or both physical and wireless communications links.

Input/output unit 212 allows for input and output of data with other devices that may be connected to data processing system 200. For example, input/output unit 212 may provide a connection for user input through a keyboard, a mouse, and/or some other suitable input device. Further, input/output unit 212 may send output to a printer. Display 214 provides a mechanism to display information to a user.

Instructions for the operating system, applications and/or programs may be located in storage devices 216, which are in communication with processor unit 204 through communications fabric 202. In these illustrative examples the instruction are in a functional form on persistent storage 208. These instructions may be loaded into memory 206 for execution by processor unit 204. The processes of the different embodiments may be performed by processor unit 204 using computer implemented instructions, which may be located in a memory, such as memory 206.

These instructions are referred to as program code, computer usable program code, or computer readable program code that may be read and executed by a processor in processor unit 204. The program code in the different embodiments may be embodied on different physical or tangible computer readable media, such as memory 206 or persistent storage 208.

Program code 218 is located in a functional form on computer readable media 220 that is selectively removable and may be loaded onto or transferred to data processing system 200 for execution by processor unit 204. Program code 218 and computer readable media 220 form computer program product 222 in these examples. In one example, computer readable media 220 may be in a tangible form, such as, for example, an optical or magnetic disc that is inserted or placed into a drive or other device that is part of persistent storage 208 for transfer onto a storage device, such as a hard drive that is part of persistent storage 208. In a tangible form, computer readable media 220 also may take the form of a persistent storage, such as a hard drive, a thumb drive, or a flash memory that is connected to data processing system 200. The tangible form of computer readable media 220 is also referred to as computer recordable storage media. In some instances, computer recordable media 220 may not be removable.

Alternatively, program code 218 may be transferred to data processing system 200 from computer readable media 220 through a communications link to communications unit 210 and/or through a connection to input/output unit 212. The communications link and/or the connection may be physical or wireless in the illustrative examples. The computer readable media also may take the form of non-tangible media, such as communications links or wireless transmissions containing the program code.

In some illustrative embodiments, program code 218 may be downloaded over a network to persistent storage 208 from another device or data processing system for use within data processing system 200. For instance, program code stored in a computer readable storage medium in a server data processing system may be downloaded over a network from the server to data processing system 200. The data processing system providing program code 218 may be a server computer, a client computer, or some other device capable of storing and transmitting program code 218.

The different components illustrated for data processing system 200 are not meant to provide architectural limitations to the manner in which different embodiments may be implemented. The different illustrative embodiments may be implemented in a data processing system including components in addition to or in place of those illustrated for data processing system 200. Other components shown in Figure 2 can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system 200 is any hardware apparatus that may store data. Memory 206, persistent storage 208, and computer readable media 220 are examples of storage devices in a tangible form.

In another example, a bus system may be used to implement communications fabric 202 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 206 or a cache, such as found in an interface and memory controller hub that may be present in communications fabric 202.

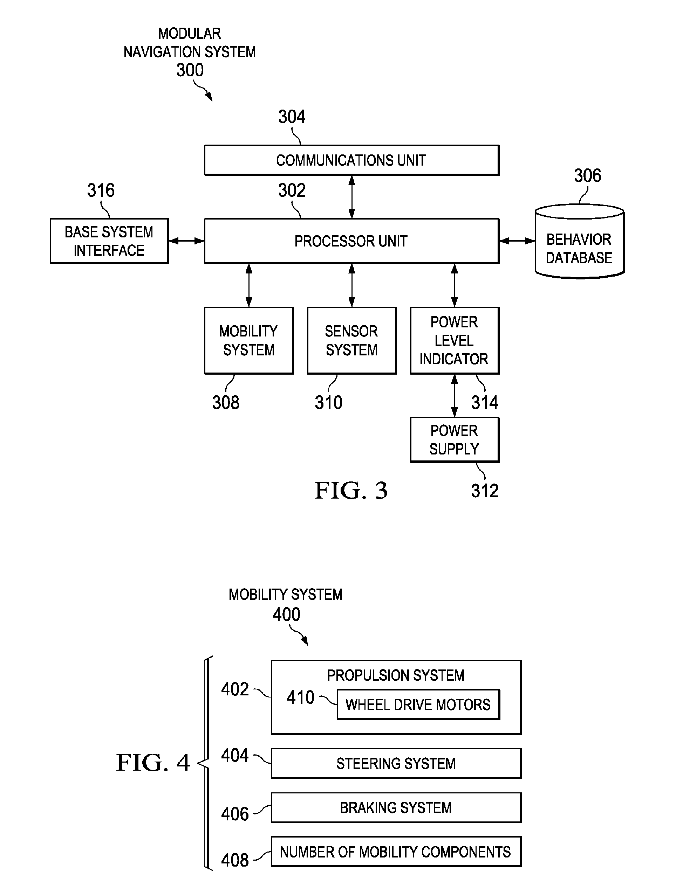

With reference now to Figure 3, a block diagram of a modular navigation system is depicted in accordance with an illustrative embodiment. Modular navigation system 300 is an example of one implementation of modular navigation system 112 in Figure 1.

Modular navigation system 300 includes processor unit 302, communications unit 304, behavior database 306, mobility system 308, sensor system 310, power supply 312, power level indicator 314, and base system interface 316. Processor unit 302 may be an example of one implementation of data processing system 200 in Figure 2. Processor unit 302 is configured to communicate with and control mobility system 308. Processor unit 302 may further communicate with and access data stored in behavior database 306. Accessing data may include any process for storing, retrieving, and/or acting on data in behavior database 306. For example, accessing data may include, without limitation, using a lookup table housed in behavior database 306, running a query process using behavior database 306, and/or any other suitable process for accessing data stored in a database.

Processor unit 302 receives information from sensor system 310 and may use sensor information in conjunction with behavior data from behavior database 306 when controlling mobility system 308. Processor unit 302 may also receive control signals from an outside controller, such as manual control device 110 operated by user 108 in Figure 1 for example. These control signals may be received by processor unit 302 using communications unit 304.

Communications unit 304 may provide communications links to processor unit 302 to receive information. This information includes, for example, data, commands, and/or instructions. Communications unit 304 may take various forms. For example, communication unit 304 may include a wireless communications system, such as a cellular phone system, a Wi-Fi wireless system, a Bluetooth wireless system, or some other suitable wireless communications system.

Communications unit 304 may also include a wired connection to an optional manual controller, such as manual control device 110 in Figure 1, for example. Further, communications unit 304 also may include a communications port, such as, for example, a universal serial bus port, a serial interface, a parallel port interface, a network interface, or some other suitable port to provide a physical communications link. Communications unit 304 may be used to communicate with an external control device or user, for example.

In one illustrative example, processor unit 302 may receive control signals from manual control device 110 operated by user 108 in Figure 1. These control signals may override autonomous behaviors of processor unit 302 and allow user 108 to stop, start, steer, and/or otherwise control the autonomous vehicle associated with modular navigation system 300.

Behavior database 306 contains a number of behavioral actions processor unit 302 may utilize when controlling mobility system 308. Behavior database 306 may include, without limitation, basic machine behaviors, random area coverage behaviors, perimeter behaviors, obstacle avoidance behaviors, manual control behaviors, modular component behaviors, power supply behaviors, and/or any other suitable behaviors for an autonomous vehicle.

Mobility system 308 provides mobility for a robotic machine, such as autonomous vehicle 102 in Figure 1. Mobility system 308 may take various forms. Mobility system 308 may include, for example, without limitation, a propulsion system, steering system, braking system, and mobility components. In these examples, mobility system 308 may receive commands from processor unit 302 and move an associated robotic machine in response to those commands.

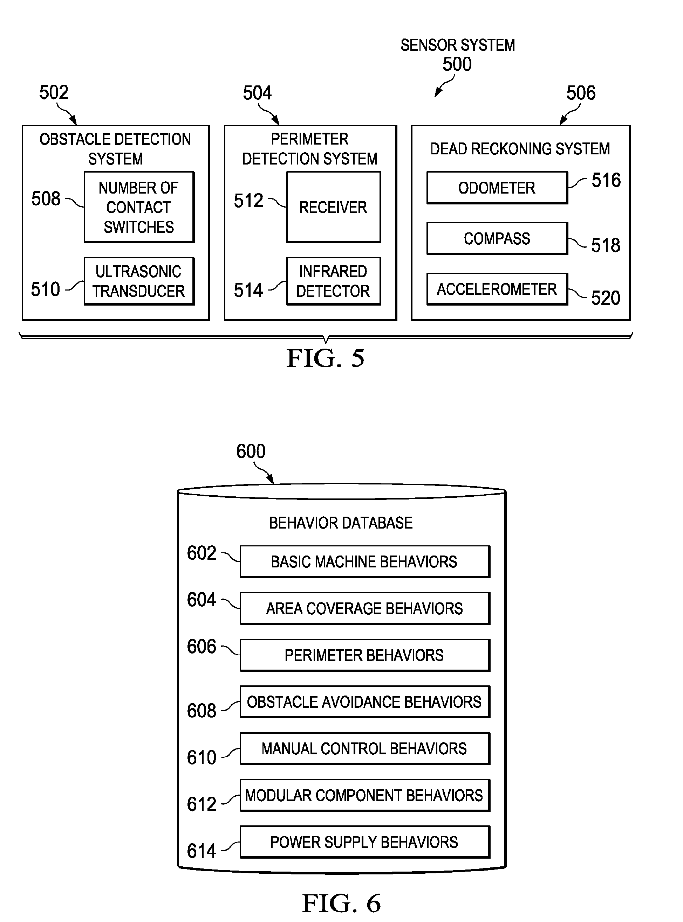

Sensor system 310 may include a number of sensor systems for collecting and transmitting sensor data to processor unit 302. For example, sensor system 310 may include, without limitation, a dead reckoning system, an obstacle detection system, a perimeter detection system, and/or some other suitable type of sensor system, as shown in more illustrative detail in Figure 5. Sensor data is information collected by sensor system 310.

Power supply 312 provides power to components of modular navigation system 300 and the associated autonomous vehicle, such as autonomous vehicle 102 in Figure 1, for example. Power supply 312 may include, without limitation, a battery, mobile battery recharger, ultracapacitor, fuel cell, gas powered generator, photo cells, and/or any other suitable power source. Power level indicator 314 monitors the level of power supply 312 and communicates the power supply level to processor unit 302. In an illustrative example, power level indicator 314 may send information about a low level of power in power supply 312. Processor unit 302 may access behaviors database 306 to employ a behavioral action in response to the indication of a low power level, in this illustrative example. For example, without limitation, a behavioral action may be to cease operation of a task and seek a recharging station in response to the detection of a low power level.

Base system interface 316 interacts with a number of modular components, such as number of modular components 104 in Figure 1, which may be added to modular navigation system 300. Base system interface 316 provides power and data communications between the base modular navigation system 300 and the number of modular components that may be added.

The illustration of modular navigation system 300 in Figure 3 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 4, a block diagram of a mobility system is depicted in accordance with an illustrative embodiment. Mobility system 400 is an example of one implementation of mobility system 308 in Figure 3.

Mobility system 400 provides mobility for robotic machines associated with a modular navigation system, such as modular navigation system 300 in Figure 3. Mobility system 400 may take various forms. Mobility system 400 may include, for example, without limitation, propulsion system 402, steering system 404, braking system 406, and number of mobility components 408. In these examples, propulsion system 402 may propel or move a robotic machine, such as autonomous vehicle 102 in Figure 1, in response to commands from a modular navigation system, such as modular navigation system 300 in Figure 3.

Propulsion system 402 may maintain or increase the speed at which an autonomous vehicle moves in response to instructions received from a processor unit of a modular navigation system. Propulsion system 402 may be an electrically controlled propulsion system. Propulsion system 402 may be, for example, without limitation, an internal combustion engine, an internal combustion engine/electric hybrid system, an electric engine, or some other suitable propulsion system. In an illustrative example, propulsion system 402 may include wheel drive motors 410. Wheel drive motors 410 may be an electric motor incorporated into a mobility component, such as a wheel, that drives the mobility component directly. In one illustrative embodiment, steering may be accomplished by differentially controlling wheel drive motors 410.

Steering system 404 controls the direction or steering of an autonomous vehicle in response to commands received from a processor unit of a modular navigation system. Steering system 404 may be, for example, without limitation, an electrically controlled hydraulic steering system, an electrically driven rack and pinion steering system, a differential steering system, or some other suitable steering system. In an illustrative example, steering system 404 may include a dedicated wheel configured to control number of mobility components 408.

Braking system 406 may slow down and/or stop an autonomous vehicle in response to commands received from a processor unit of a modular navigation system. Braking system 406 may be an electrically controlled braking system. This braking system may be, for example, without limitation, a hydraulic braking system, a friction braking system, or some other suitable braking system that may be electrically controlled. In one illustrative embodiment, a modular navigation system may receive commands from an external controller, such as manual control device 110 in Figure 1, to activate an emergency stop. The modular navigation system may send commands to mobility system 400 to control braking system 406 to perform the emergency stop, in this illustrative example.

Number of mobility components 408 provides autonomous vehicles with the capability to move in a number of directions and/or locations in response to instructions received from a processor unit of a modular navigation system and executed by propulsion system 402, steering system 404, and braking system 406. Number of mobility components 408 may be, for example, without limitation, wheels, tracks, feet, rotors, propellers, wings, and/or other suitable components.

The illustration of mobility system 400 in Figure 4 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 5, a block diagram of a sensor system is depicted in accordance with an illustrative embodiment. Sensor system 500 is an example of one implementation of sensor system 310 in Figure 3.

Sensor system 500 includes a number of sensor systems for collecting and transmitting sensor data to a processor unit of a modular navigation system, such as modular navigation system 300 in Figure 3. Sensor system 500 includes obstacle detection system 502, perimeter detection system 504, and dead reckoning system 506.

Obstacle detection system 502 may include, without limitation, number of contact switches 508 and ultrasonic transducer 510. Number of contact switches 508 detects contact by an autonomous vehicle with an external object in the environment, such as worksite environment 100 in Figure 1 for example. Number of contact switches 508 may include, for example, without limitation, bumper switches. Ultrasonic transducer 510 generates high frequency sound waves and evaluates the echo received back. Ultrasonic transducer 510 calculates the time interval between sending the signal, or high frequency sound waves, and receiving the echo to determine the distance to an object.

Perimeter detection system 504 detects a perimeter or boundary of a worksite, such as worksite 114 in Figure 1, and sends information about the perimeter detection to a processor unit of a modular navigation system. Perimeter detection system 504 may include, without limitation, receiver 512 and infrared detector 514. Receiver 512 detects electrical signals, which may be emitted by a wire delineating the perimeter of a worksite, such as worksite 114 in Figure 1, for example. Infrared detector 514 detects infrared light, which may be emitted by an infrared light source along the perimeter of a worksite, such as worksite 114 in Figure 1 for example.

In an illustrative example, receiver 512 may detect an electrical signal from a perimeter wire, and send information about that detected signal to a processor unit of a modular navigation system, such as modular navigation system 300 in Figure 3. The modular navigation system may then send commands to a mobility system, such as mobility system 400 in Figure 4, to alter the direction or course of a mobile robotic unit associated with the modular navigation system, in this illustrative example.

Dead reckoning system 506 estimates the current position of an autonomous vehicle associated with the modular navigation system. Dead reckoning system 506 estimates the current position based on a previously determined position and information about the known or estimated speed over elapsed time and course. Dead reckoning system 506 may include, without limitation, odometer 516, compass 518, and accelerometer 520. Odometer 516 is an electronic or mechanical device used to indicate distance traveled by a machine, such as autonomous vehicle 102 in Figure 1. Compass 518 is a device used to determine position or direction relative to the Earth's magnetic poles. Accelerometer 520 measures the acceleration it experiences relative to freefall.

The illustration of sensor system 500 in Figure 5 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 6, a block diagram of a behavior database is depicted in accordance with an illustrative embodiment. Behavior database 600 is an example of one implementation of behavior database 306 in Figure 3.

Behavior database 600 includes a number of behavioral actions processor unit 302 of modular navigation system 300 may utilize when controlling mobility system 308 in Figure 3. Behavior database 600 may include, without limitation, basic machine behaviors 602, area coverage behaviors 604, perimeter behaviors 606, obstacle avoidance behaviors 608, manual control behaviors 610, modular component behaviors 612, power supply behaviors 614, and/or any other suitable behaviors for an autonomous vehicle.

Basic machine behaviors 602 provide actions for a number of basic tasks an autonomous vehicle may perform. Basic machine behaviors 602 may include, without limitation, mowing, vacuuming, floor scrubbing, leaf removal, snow removal, watering, spraying, and/or any other suitable task.

Area coverage behaviors 604 provide actions for random area coverage when performing basic machine behaviors 602. Perimeter behaviors 606 provide actions for a modular navigation system in response to perimeter detection, such as by perimeter detection system 504 in Figure 5. In an illustrative example, perimeter behaviors 606 may include, without limitation, change heading for an autonomous vehicle by a number of degrees in order to stay within a perimeter.

Obstacle avoidance behaviors 608 provide actions for a modular navigation system to avoid collision with objects in an environment around an autonomous vehicle. In an illustrative example, obstacle avoidance behaviors 608 may include, without limitation, reversing direction and changing heading for an autonomous vehicle by number of degrees before moving forward in order to avoid collision with an object detected by an obstacle detection system, such as obstacle detection system 502 in Figure 5.

Manual control behaviors 610 provide actions for a modular navigation system to disable autonomy and take motion control from a user, such as user 108 in Figure 1 for example. Modular component behaviors 612 provide actions for a modular navigation system to disable random area coverage pattern behaviors, such as area coverage behaviors 604, and accept commands from a higher level processor unit. In an illustrative example, modular navigation system 300 in Figure 3 may detect the addition of a modular component, and access behavior database 306 to employ modular component behaviors 612. Modular component behaviors 612 may direct processor unit 302 of modular navigation system 300 to accept commands from the processor unit of the modular component that has been added, in this illustrative example.

Power supply behaviors 614 provide actions for a modular navigation system to take a number of actions in response to a detected level of power in a power supply, such as power supply 312 in Figure 3. In an illustrative example, power supply behaviors 614 may include, without limitation, stopping the task operation of an autonomous vehicle and seeking out additional power or power recharge for the autonomous vehicle.

The illustration of behavior database 600 in Figure 6 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

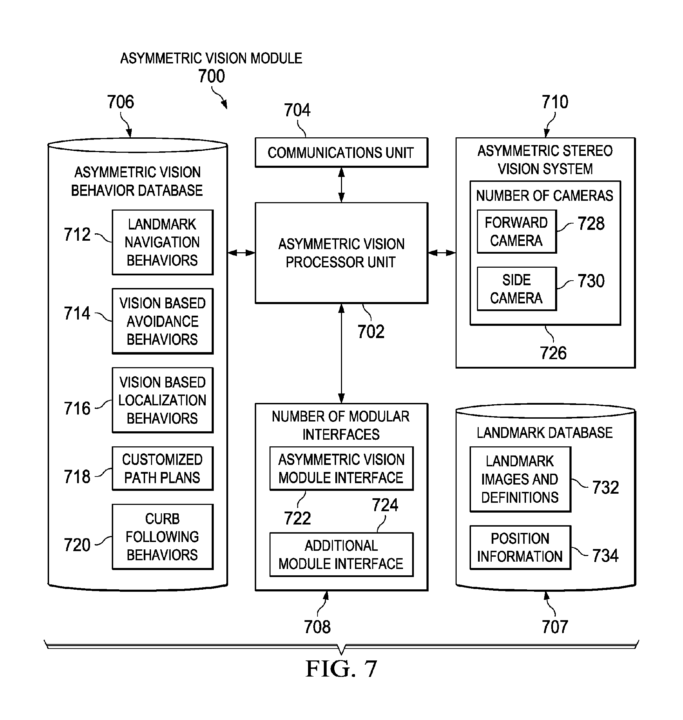

With reference now to Figure 7, a block diagram of an asymmetric vision module is depicted in accordance with an illustrative embodiment. Asymmetric vision module 700 is an example of one implementation of a modular component in number of modular components 104 in Figure 1. Asymmetric vision refers to any type of vision capabilities that operate in the absence of symmetry. For example, in an illustrative embodiment, asymmetric vision module 700 provides vision capabilities with two or more cameras that each operate in a different position, with different sensor elements, different resolutions, and/or any other different features that provide asymmetry to the vision capabilities of asymmetric vision module 700.

Asymmetric vision module 700 provides enhanced vision capabilities to a modular navigation system for improved positioning and navigation. Asymmetric vision module 700 may include, without limitation, asymmetric vision processor unit 702, communications unit 704, asymmetric vision behavior database 706, landmark database 707, number of modular interfaces 708, and asymmetric stereo vision system 710.

Asymmetric vision processor unit 702 provides higher processing capabilities than the base processor unit of a modular navigation system, such as processor unit 302 in Figure 3. Asymmetric vision processor unit 702 is configured to communicate with the base processor unit of a modular navigation system, such as processor unit 302 of modular navigation system 300 in Figure 3. Asymmetric vision processor unit 702 communicates with and sends commands through the base processor unit to control the mobility system of an autonomous vehicle. Asymmetric vision processor unit 702 receives information from the sensor system of the base system, such as sensor system 310 of modular navigation system 300 in Figure 3, and may use the sensor information in conjunction with behavior data from asymmetric vision behavior database 706 when controlling the mobility system of an autonomous vehicle.

Communications unit 704 may provide additional communication links not provided by the base communications unit of a modular navigation system, such as communications unit 304 in Figure 3. Communications unit 704 may include, for example, without limitation, wireless Ethernet if wireless communications are not part of the base level communications unit.

Asymmetric vision behavior database 706 includes a number of enhanced behavioral actions asymmetric vision processor unit 702 may employ. Asymmetric vision processor unit 702 may communicate with and access data stored in asymmetric vision behavior database 706. Asymmetric vision behavior database 706 may include, without limitation, landmark navigation behaviors 712, vision based avoidance behaviors 714, vision based localization behaviors 716, customized path plans 718, and curb following behaviors 720.

Landmark database 707 includes landmark images and definitions 732 and position information 734. Landmark images and definitions 732 may be used by asymmetric vision processor unit 702 to identify landmarks in a number of images obtained by asymmetric stereo vision system 710. Position information 734 may include position information associated with a number of landmarks identified in landmark images and definitions 732. Position information 734 may include, for example, without limitation, global location coordinates obtained using a global positioning system or local location coordinates using a local positioning system.

Number of modular interfaces 708 interacts with the base system interface, such as base system interface 316 in Figure 3, and a number of additional modular components, such as number of modular components 104 in Figure 1, which may be added to a modular navigation system in concert, or in addition, to asymmetric vision module 700. Number of modular interfaces 708 includes asymmetric vision module interface 722 and additional module interface 724. Asymmetric vision module interface 722 interacts with the base system interface, such as base system interface 316 in Figure 3, to receive power and data communications between the base modular navigation system and asymmetric vision module 700. Additional module interface 724 provides for the optional addition of another modular component to interface, or interact, with asymmetric vision module 700.

Asymmetric vision processor unit 702 may also receive control signals from an outside controller, such as manual control device 110 operated by user 108 in Figure 1 for example. In an illustrative example, these control signals may be received by asymmetric vision processor unit 702 directly using communications unit 704. In another illustrative example, these control signals may be received by the base processor unit and transmitted to asymmetric vision processor unit 702 through asymmetric vision module interface 722 in number of modular interfaces 708.

Asymmetric stereo vision system 710 includes number of cameras 726. As used herein, number of cameras refers to two or more cameras. Asymmetric stereo vision system 710 operates to provide depth of field perception by providing images from two or more cameras for enhanced vision capabilities of a modular navigation system. Number of cameras 726 may be separated by a camera baseline distance. The camera baseline distance is a parameter in the system design for each particular camera used, and may vary according to the type of cameras implemented in number of cameras 726. In addition, the camera baseline distance may be configured to support specific behaviors that are to be implemented by an autonomous vehicle.

Number of cameras 726 may have different fields of view, different positions on a robotic machine, different sensor elements, different resolutions, and/or any other different features that result in asymmetric attributes of cameras used together for stereo ranging in a region of overlapping fields of view. For example, the resolution for each of number of cameras 726 may be based on localization accuracy requirements for a given landmark distance, total field of view requirements for landmark localization, the required distance resolution for the stereo vision region, and/or any other vision system behavior requirement. Field of view refers to the angular extent of the observable world that is viewed at any given moment.

In an illustrative embodiment, number of cameras 726 may include forward camera 728 and side camera 730. In an illustrative embodiment, forward camera 728 and side camera 730 have different fields of view based on camera optics and different resolutions based on camera sensors. In another illustrative embodiment, forward camera 728 and side camera 730 may have significantly different views of worksite 114 based on mounting location of cameras on autonomous vehicle 102 in Figure 1, for example. In contrast, traditional stereo vision systems have identical cameras, separated by a baseline, pointing in nearly the same direction.

The illustration of asymmetric vision module 700 in Figure 7 is not meant to imply physical or architectural limitations to the manner in which different advantageous embodiments may be implemented. Other components in addition and/or in place of the ones illustrated may be used. Asymmetric vision module 700, for example, may be integrated into modular navigation system 300 rather than separately attached. Some components may be unnecessary in some advantageous embodiments. Also, the blocks are presented to illustrate some functional components. One or more of these blocks may be combined and/or divided into different blocks when implemented in different advantageous embodiments.

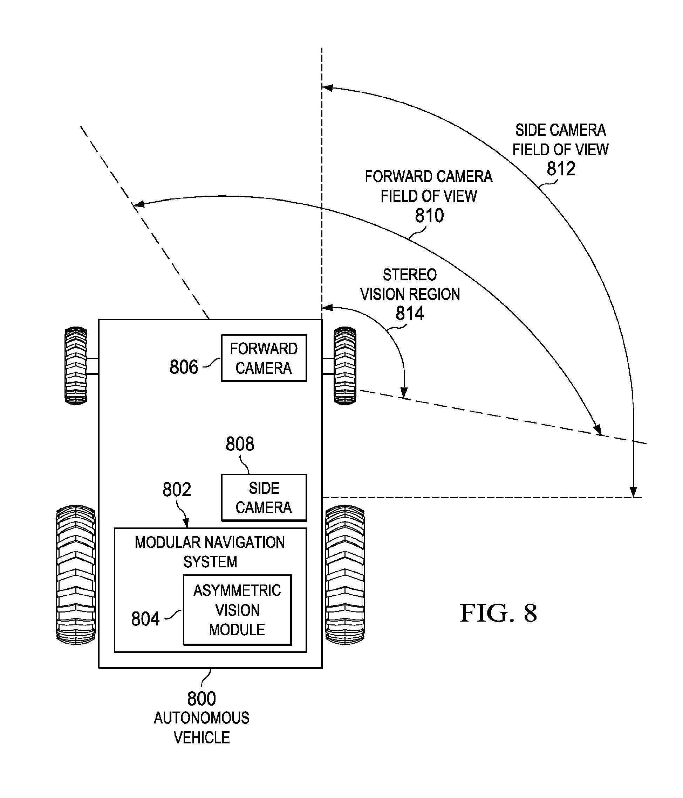

With reference now to Figure 8, a block diagram of an autonomous vehicle is depicted in accordance with an illustrative embodiment. Autonomous vehicle 800 is an example of one implementation of autonomous vehicle 102 in Figure 1 upgraded to include an asymmetric vision module, such as asymmetric vision module 700 in Figure 7.

Autonomous vehicle 800 includes modular navigation system 802. Modular navigation system 802 has been upgraded, or enhanced, to include asymmetric vision module 804. Asymmetric vision module 804 includes forward camera 806 and side camera 808 in this illustrative embodiment.

Forward camera 806 and side camera 808 have different fields of view. In this illustrative embodiment, forward camera 806 is positioned at the forward location of autonomous vehicle 800 and directed to provide a generally forward camera field of view 810. Forward camera field of view 810 may have, for example, without limitation, a field of view of 135 degrees. Forward camera 806 is positioned to provide coverage to the front and along a portion of the side of autonomous vehicle 800. Forward camera 806 is also positioned to provide coverage of the ground to the right side of autonomous vehicle 800, as well as coverage of the area above the height of autonomous vehicle 800.

Side camera 808 is positioned along the right side of autonomous vehicle 800 and directed to provide side camera field of view 812. Side camera field of view 812 may have, for example, without limitation, a field of view of 90 degrees. In this illustrative example, side camera 808 uses a lower resolution image sensor than forward camera 806. Forward camera field of view 810 and side camera field of view 812 overlap to provide stereo vision region 814.

The illustration of autonomous vehicle 800 in Figure 8 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, the resolutions and the ratio of the resolutions for the number of cameras used in asymmetric vision module 804 will depend on localization accuracy requirements for a given landmark or obstacle distance, the total field of view for landmark localization, and stereo distance resolution in the overlapping camera fields of view.

In the illustrative embodiments, the visual landmarks and obstacles may be two dimensional or three dimensional, depending on whether single or stereo images are being used. The landmarks and obstacles may be defined, for example, by at least one of color, shape, texture, pattern, and position relative to local terrain. Position relative to local terrain may refer to pop-ups or drop-offs in pixel distance.

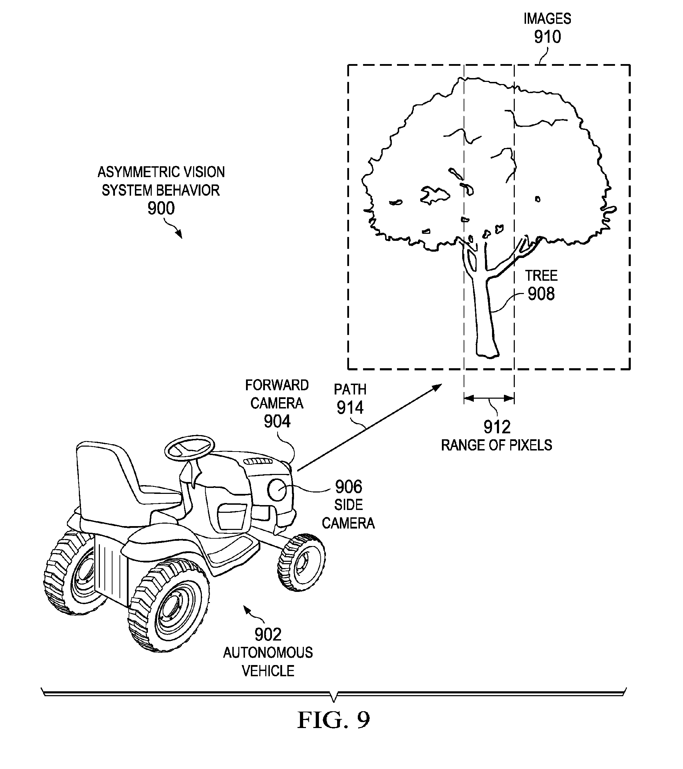

With reference now to Figure 9, a block diagram of an asymmetric vision system behavior is depicted in accordance with an illustrative embodiment. Asymmetric vision system behavior 900 may be implemented by a component such as asymmetric vision module 700 in Figure 7, for example.

Autonomous vehicle 902 is configured with a modular navigation system enhanced with an asymmetric vision system to include forward camera 904 and side camera 906. The processor unit of the asymmetric vision system may identify a task for autonomous vehicle 902 to perform. The processor unit may also identify an associated behavior for the task from a behavior store, such as asymmetric vision behavior database 706 in Figure 7, for example. In an illustrative example, the task may be to proceed to landmark tree 908. The behavior associated with proceed to landmark may be, for example, landmark navigation 712 in Figure 7.

Forward camera 904 and/or side camera 906 may capture images 910 of tree 908 to enable landmark navigation behaviors. Images 910 may be a series of images captured as autonomous vehicle 902 moves or changes positions. Autonomous vehicle 902 is autonomously steered to tree 908 by maintaining tree 908 in a given range of pixels 912 within images 910. In one illustrative example, the distance remaining to tree 908 may also be calculated by tracking the increasing width of tree 908 in images 910 as autonomous vehicle 902 progresses on path 914, if the diameter of tree 908 is known. Known parameters, such as the diameter of tree 908 for example, may be stored in a database accessible to the processor unit of the modular navigation system.

The illustration of asymmetric vision system behavior 900 in Figure 9 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

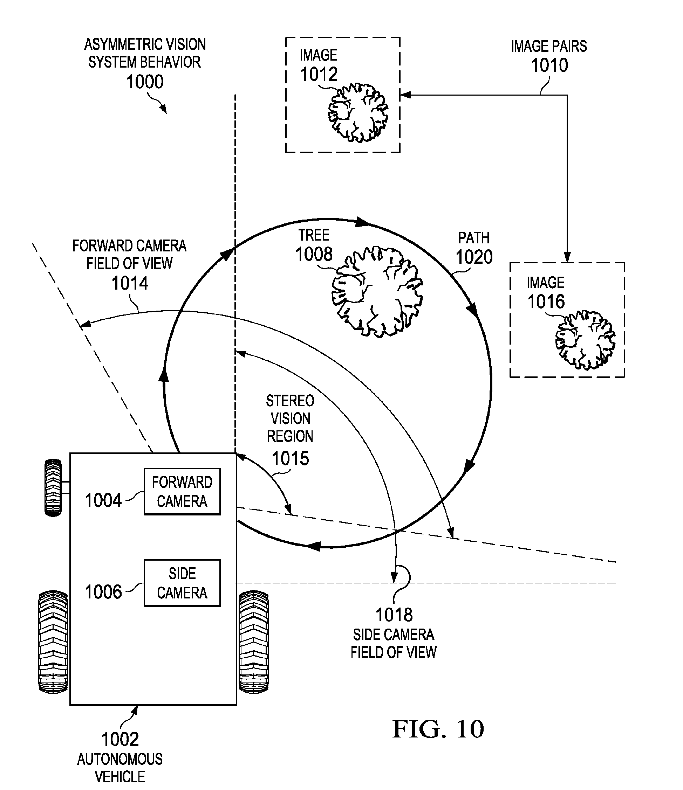

With reference now to Figure 10, a block diagram of an asymmetric vision system behavior is depicted in accordance with an illustrative embodiment. Asymmetric vision system behavior 1000 may be implemented by a component such as asymmetric vision module 700 in Figure 7, for example.

Autonomous vehicle 1002 is configured with a modular navigation system enhanced with an asymmetric vision system to include forward camera 1004 and side camera 1006. The processor unit of the asymmetric vision system may identify a task for autonomous vehicle 1002 to perform. The processor unit may also identify an associated behavior for the task from a behavior store, such as asymmetric vision behavior database 706 in Figure 7, for example. In an illustrative example, the task may be to circle around tree 1008 without touching tree 1008. The behavior associated with proceed to landmark may be, for example, vision based avoidance behaviors 714 in Figure 7. In one illustrative embodiment, proceed to landmark tree 908 may be the task that proceeds circle around tree 1008. In this example, tree 1008 may be an example of one implementation of tree 908.

Forward camera 1004 and side camera 1006 may capture image pairs 1010 of tree 1008 to enable landmark navigation and vision avoidance behaviors. Image pairs 1010 may be a series of images captured as autonomous vehicle 1002 moves or changes positions. Image pairs 1010 provide a pair of images from the different fields of view and perspectives of forward camera 1004 and side camera 1006. For example, forward camera 1004 captures image 1012 in forward camera field of view 1014. Side camera 1006 captures image 1016 in side camera field of view 1018. Image pairs 1010 allow a modular navigation system of autonomous vehicle 1002 to adjust movement and positioning of autonomous vehicle 1002 as it progresses along path 1020 in order to avoid contact with tree 1008.

Once autonomous vehicle 1002 has arrived at tree 1008, a circle tree behavior may be invoked, as depicted by path 1020. In this example, image pairs 1010 may have common stereo vision region 1015 processed by the modular navigation system of autonomous vehicle 1002 to generate distance of autonomous vehicle 1002 from tree 1008. This distance is held at a preprogrammed amount through steering as tree 1008 is circled, as illustrated by path 1020.

While the above stereo distance is being used to navigate autonomous vehicle 1002 around tree 1008, images from forward camera 1004 can be analyzed for obstacles in and/or along path 1020. While the obstacle may be outside of stereo vision region 1015, techniques such as monocular stereo may be used to calculate a distance to the obstacle, in an illustrative embodiment. The illustration of asymmetric vision system behavior 1000 in Figure 10 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

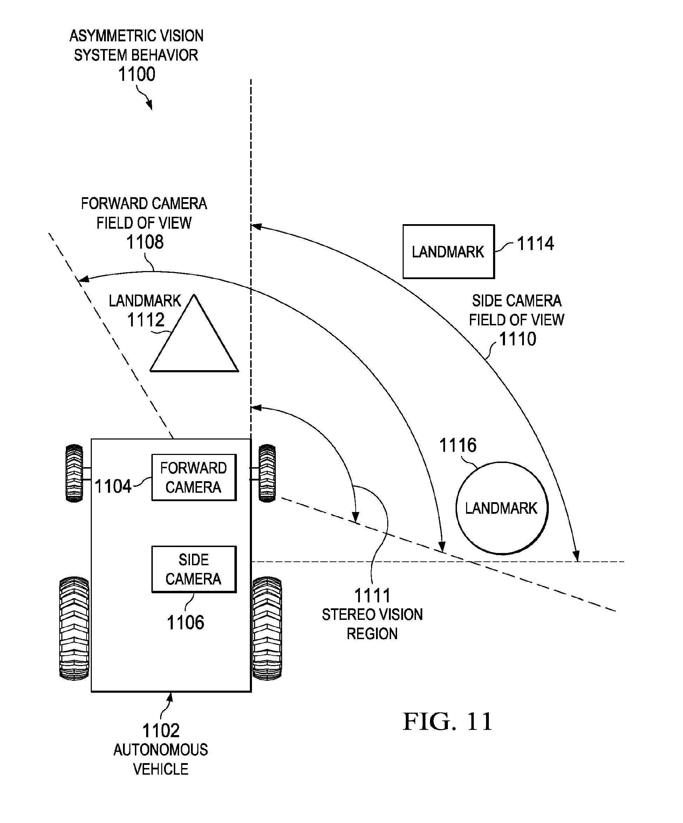

With reference now to Figure 11, a block diagram of an asymmetric vision system behavior is depicted in accordance with an illustrative embodiment. Asymmetric vision system behavior 1100 may be implemented by a component such as asymmetric vision module 700 in Figure 7, for example.

Autonomous vehicle 1102 is configured with a modular navigation system enhanced with an asymmetric vision system to include forward camera 1104 and side camera 1106. The processor unit of the asymmetric vision system may identify a task for autonomous vehicle 1102 to perform. The processor unit may also identify an associated behavior for the task from a behavior store, such as asymmetric vision behavior database 706 in Figure 7, for example. In an illustrative example, the task may be to localize the position of autonomous vehicle 1102 using vision based localization behaviors, such as vision based localization behaviors 716 in Figure 7.

Autonomous vehicle 1102 may adjust its position and pose to provide landmark geometry to localize using both forward camera 1104 and side camera 1106. Forward camera 1104 includes forward camera field of view 1108, while side camera 1106 includes side camera field of view 1110. Forward camera 1104 and side camera 1106 may be used by the modular navigation system to capture a number of images of the environment around autonomous vehicle 1102.

Landmark 1112 may only be visible in forward camera field of view 1108. Landmark 1114 and landmark 1116 may be visible to both forward camera 1104 and side camera 1106, falling within stereo vision region 1111. Landmark 1112, landmark 1114, and landmark 1116 may be used for triangulation in order to perform localization behaviors in this example.

The modular navigation system of autonomous vehicle 1102 may perform localization behaviors using position information for landmark 1112, landmark 1114, and landmark 1116. The position information may be obtained from a landmark database, such as landmark database 707 in Figure 7, for example. The position information may include information such as coordinates obtained using global or local coordinate systems, for example. The modular navigation system calculates the position of autonomous vehicle 1102 based on the position information for landmark 1112, landmark 1114, and landmark 1116.

In one illustrative embodiment, with landmark 1112, landmark 1114, and landmark 1116 identified in the number of images, the angles of each of landmark 1112, landmark 1114, and landmark 1116 from autonomous vehicle 1102 can be used to triangulate the location of the autonomous vehicle. In another illustrative embodiment, distances between autonomous vehicle 1102 and landmarks 1114 and 1116 in stereo vision region 1111 can be used to calculate the location of autonomous vehicle 1102. In this example, the distances to landmarks 1114 and 1116 can be calculated using stereo vision techniques known in the art. With distances to only two landmarks, such as landmarks 1114 and 1116, the localization algorithm yields two possible position solutions. The additional observation that landmark 1112 lies ahead of autonomous vehicle 1102 can be used to select the correct solution even though the distance between autonomous vehicle 1102 and landmark 1112 cannot be calculated using two camera stereo vision techniques.

The illustration of asymmetric vision system behavior 1100 in Figure 11 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

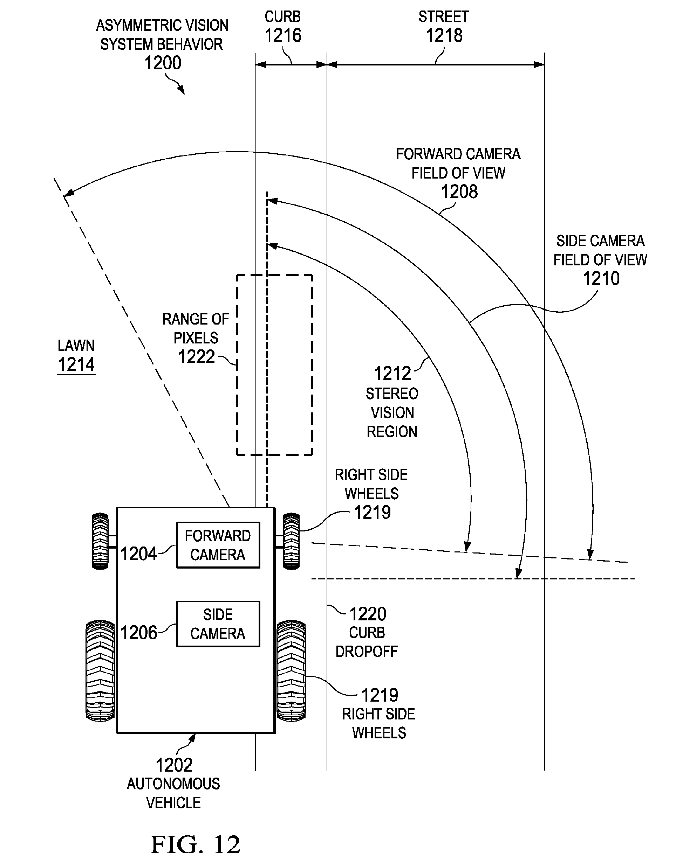

With reference now to Figure 12, a block diagram of an asymmetric vision system behavior is depicted in accordance with an illustrative embodiment. Asymmetric vision system behavior 1200 may be implemented by a component such as asymmetric vision module 700 in Figure 7, for example.

Autonomous vehicle 1202 is configured with a modular navigation system enhanced with an asymmetric vision system to include forward camera 1204 and side camera 1206. The processor unit of the asymmetric vision system may identify a task for autonomous vehicle 1202 to perform. The processor unit may also identify an associated behavior for the task from a behavior store, such as asymmetric vision behavior database 706 in Figure 7, for example. In an illustrative example, the task may be to mow a lawn using landmark navigation behaviors and curb following behaviors, such as curb following behaviors 720 in Figure 7.

Forward camera 1204 and side camera 1206 have different fields of view. In this illustrative embodiment, forward camera 1204 is positioned at the forward location of autonomous vehicle 1202 and directed to provide a generally forward camera field of view 1208. Forward camera field of view 1208 may have, for example, without limitation, a field of view of 135 degrees. Forward camera 1204 is positioned to provide coverage to the front and along a portion of the side of autonomous vehicle 1202. Forward camera 1204 is also positioned to provide coverage of the ground to the right side of autonomous vehicle 1202, as well as coverage of the area above the height of autonomous vehicle 1202.

Side camera 1206 is positioned along the right side of autonomous vehicle 1202 and directed to provide side camera field of view 1210. Side camera field of view 1210 may have, for example, without limitation, a field of view of 90 degrees.

Autonomous vehicle 1202 may be tasked to mow lawn 1214. Curb following behaviors 720 may be used to achieve area coverage of the portion of the lawn along curb 1216, for example. Curb following behaviors may include, for example, landmark navigation behaviors. The landmarks in this illustrative example may be lawn 1214, curb 1216, and street 1218. Autonomous vehicle 1202 may need to have its right side wheels 1219 on curb 1216 in order to mow all the grass of lawn 1214 up to curb 1216, yet not so far right that the right side wheels 1219 drop off curb 1216.

A target location of the landmarks in images captured by forward camera 1204 and side camera 1206 is calculated by the modular navigation system of autonomous vehicle 1202. The target location is defined by range of pixels 1222. Range of pixels 1222 will depend on the landmark as well as asymmetric vision system design parameters of forward camera 1204 and/or side camera 1206. Design parameters may include, for example, mounting position and angle, sensor resolution, and optical field of view.

In this illustrative example, range of pixels 1222 may be defined so the left side of the range, possibly identified by the edge of grass green pixels of lawn 1214 in the images, is lined up roughly with the dotted line depicting the left boundary of side camera field of view 1210. The right side of range of pixels 1222 may be defined by curb drop-off 1220, which is noted by a sharply increased distance to pixels in images captured that include curb 1216 and street 1218. In this example, as long as the grass edge is within range of pixels 1222 and curb drop-off 1220 is outside range of pixels 1222, autonomous vehicle 1202 may be considered as correctly following curb 1216 while mowing lawn 1214 on the edge of lawn 1214.

The illustration of asymmetric vision system behavior 1200 in Figure 12 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

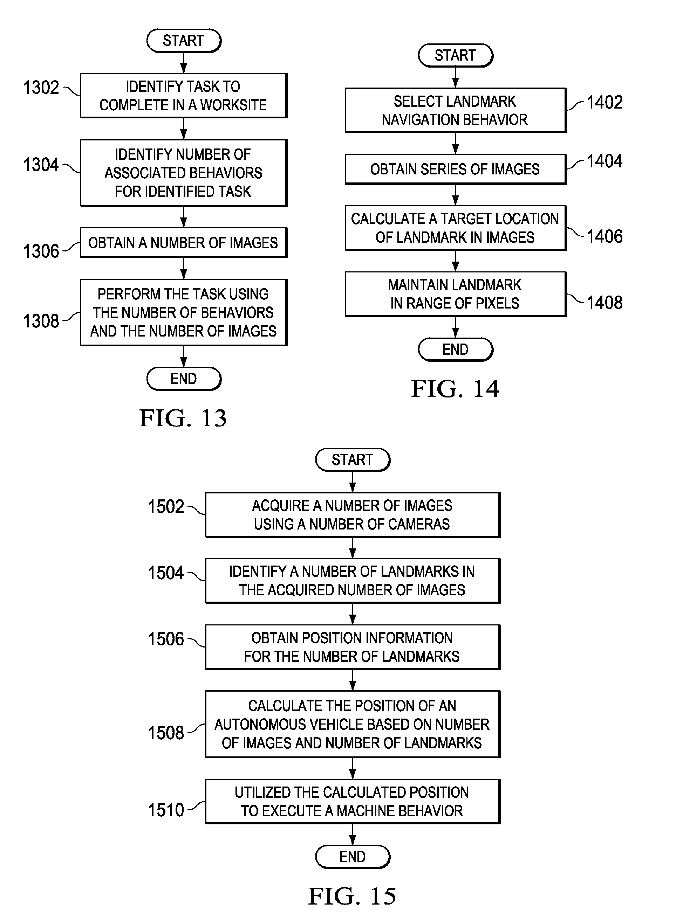

With reference now to Figure 13, a flowchart illustrating a process for operating an asymmetric vision system is depicted in accordance with an illustrative embodiment. The process in Figure 13 may be implemented by a component such as modular navigation system 300 in Figure 3 enhanced with asymmetric vision module 700 in Figure 7.

The process begins by identifying a task to complete in a worksite (step 1302). The task may be, for example, mowing a yard. The task may be completed by an autonomous vehicle, such as autonomous vehicle 102, having a modular navigation system, such as modular navigation system 112 in Figure 1. The process identifies a number of associated behaviors for the identified task (step 1304). The associated behaviors may be selected from a behavior store, such as asymmetric vision behavior database 706 in Figure 7, for example.

Next, the process obtains a number of images (step 1306). The number of images may be obtained using a number of cameras, such as number of cameras 726 in Figure 7, for example. The process performs the task using the number of associated behaviors and the number of images (step 1308), with the process terminating thereafter.

With reference now to Figure 14, a flowchart illustrating a process for landmark navigation is depicted in accordance with an illustrative embodiment. The process in Figure 14 may be implemented by a component such as modular navigation system 300 in Figure 3 enhanced with asymmetric vision module 700 in Figure 7.

The process begins by selecting a landmark navigation behavior (step 1402). The landmark navigation behavior may be, for example, "proceed to landmark." The process then obtains a series of images (step 1404). The series of images may be, for example, images of a landmark selected as part of a task, such as "proceed to landmark" for example. As an autonomous vehicle proceeds towards the landmark, the series of images are captured and processed for positioning and navigation. The series of images may be captured by a number of cameras, such as forward camera 904 and/or side camera 906 in Figure 9, for example.

The process then calculates a target location of the landmark in images (step 1406). The target location may be defined by a range of pixels, such as range of pixels 912 in Figure 9 and/or range of pixels 1222 in Figure 12. The range of pixels will depend on the landmark as well as asymmetric vision system design parameters of the forward camera and/or side camera, such as mounting position and angle, sensor resolution, and optical field of view. The target range of pixels for a landmark directly in front of an autonomous vehicle may not be in the center of the forward camera and/or forward field of view.

The process maintains the landmark in the range of pixels (step 1408), with the process terminating thereafter.

With reference now to Figure 15, a flowchart illustrating a process for landmark localization is depicted in accordance with an illustrative embodiment. The process in Figure 15 may be implemented by a component such as modular navigation system 300 in Figure 3 enhanced with asymmetric vision module 700 in Figure 7.

The process begins by acquiring a number of images using a number of cameras (step 1502), such as forward camera 1104 and side camera 1106 in Figure 11, for example. The process identifies a number of landmarks in the acquired number of images (step 1504). Landmarks are identified by matching sub-areas of the images with landmark template images or other definitions. Techniques such as template matching are well known in the art. Landmark template images may be accessed from a database, such as landmark database 707 in Figure 7, for example.

The number of landmarks may be, for example, without limitation, visual landmarks and obstacles. The landmarks and obstacles may be defined, for example, by color, shape, texture, pattern, and position relative to local terrain. Position relative to local terrain may refer to pop-ups or drop-offs in pixel distance. For example, in an illustrative embodiment, a drop-off in pixel distance may occur when a curb drops off to a street level, such as curb drop-off 1220 in Figure 12.

Next, the process obtains position information for the number of landmarks (step 1506). The position information may be from a landmark database, such as landmark database 707 in Figure 7, for example. The position information may include information such as coordinates obtained using global or local coordinate systems, for example. The process then calculates the position of an autonomous vehicle based on the number of images and identified number of landmarks (step 1508). In one illustrative embodiment, with the landmarks identified in the number of images, the angles from the autonomous vehicle can be used to triangulate the location of the autonomous vehicle. In another illustrative embodiment, distances between the autonomous vehicle and the number of landmarks in the stereo region of vision for the autonomous vehicle can be used to calculate the location. For example, landmarks 1114 and 1116 in Figure 11 lie in stereo vision region 1111. The distances to these landmarks can be calculated using stereo vision techniques known in the art. With distances to only two landmarks, such as landmarks 1114 and 1116 in Figure 11, the localization algorithm yields two possible position solutions. The additional observation that landmark 1112 lies ahead of autonomous vehicle 1102 in Figure 11 can be used to select the correct solution even though the distance between autonomous vehicle 1102 and landmark 1112 cannot be calculated using two camera stereo vision techniques.

The process then utilizes the calculated position to execute a machine behavior (step 1510), with the process terminating thereafter.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The different illustrative embodiments recognize and take into account that currently used methods for robotic navigation often use a very primitive, random navigation system. This random navigation system works within a perimeter established by a wire carrying an electrical signal. The robotic machines in currently used methods may be equipped with an electrical signal detector and a bumper switch on the body of the machine. These machines move in a generally straight direction until they either detect the signal from the perimeter wire or a bumper switch is closed due to contact of the machine with an external object. When either of these two situations occurs, these machines change direction. In this way, current methods constrain the machine within a work area perimeter and maintain movement after contact with external objects.

The different illustrative embodiments further recognize and take into account that currently used systems for robotic navigation are fixed systems integrated into a robotic machine. These fixed systems may include advanced sensors for positioning and navigation, which allows for more efficient and precise coverage, but also increases the expense of the robotic machine by hundreds or thousands of dollars above the price of a robotic machine with basic, random navigation systems.

The different illustrative embodiments further recognize and take into account that currently used vision systems for vehicle navigation require symmetry in the camera sensor resolution and the field of view to the vehicle. Fixed camera sensors are used, and an additional mechanism may be employed to provide mobility to the camera head. The mobility is limited to the mechanism used to turn the camera head, and is typically limited to a precisely known angle relative to the vehicle.

The different illustrative embodiments further recognize and take into account that traditional stereo vision systems with identical cameras facing generally the same direction encounter several deficiencies. For example, if the cameras are facing forward, they do not see to the side of the vehicle very well, if at all. This limitation presents problems for tasks which must be carried out in proximity to an object on the side of an autonomous vehicle, such as autonomous vehicle 1002 circling tree 1008 closely without touching it in Figure 1000, for example. Current methods for addressing this problem include placing a second set of symmetric stereo cameras on the side of an autonomous vehicle. This solution, however, doubles the vision system cost. Another solution may be to rotate the symmetric stereo vision system from facing forward to facing the side. This solution also adds cost in the form of a closed-loop stereo camera rotation system and may decrease functionality since having the symmetric stereo vision system facing the side may result in loss of sight of obstacles in front of autonomous vehicle.

Thus, one or more of the different illustrative embodiments provide an apparatus that includes an autonomous vehicle, a modular navigation system, and an asymmetric vision module. The modular navigation system is coupled to the autonomous vehicle. The asymmetric vision module is configured to interact with the modular navigation system.

The different illustrative embodiments further provide an apparatus that includes a processor unit, a behavior database, a system interface, and a number of asymmetric cameras. The processor unit is configured to perform vision based positioning and navigation. The behavior database is configured to be accessed by the processor unit. The system interface is coupled to the processor unit and configured to interact with a modular navigation system.

The different illustrative embodiments further provide a method for robotic navigation. A task is received to complete in a worksite. A number of behaviors are accessed from a behavior database using a processor unit. A number of images are obtained from a number of cameras using the processor unit. The task is performed using the number of behaviors and the number of images.

The different illustrative embodiments provide for good forward and side vision using two fixed cameras. Stereo ranging is possible where the field of view of the two cameras overlap. System cost is further reduced if one of the cameras uses a lower resolution sensor than the other, perhaps because it is covering a smaller field of view than the other camera.

The description of the different advantageous embodiments has been presented for purposes of illustration and description, and is not intended to be exhaustive or limited to the embodiments in the form disclosed. Many modifications and variations will be apparent to those of ordinary skill in the art. Further, different embodiments may provide different advantages as compared to other embodiments. The embodiment or embodiments selected are chosen and described in order to best explain the principles of the invention, the practical application, and to enable others of ordinary skill in the art to understand the invention for various embodiments with various modifications as are suited to the particular use contemplated.

## Claims

1. An apparatus comprising:
an autonomous vehicle (102);
a navigation system (112) coupled to the autonomous vehicle (102); and
an asymmetric vision module (700) configured to interact with the navigation system (112).

2. The apparatus of claim 1, wherein the asymmetric vision module (700) interacts with the navigation system (112) using a system interface (316).

3. The apparatus of claim 1, wherein the asymmetric vision module (700) further comprises:
a processor unit (702) configured to communicate with and control a base processor unit (302) of the modular navigation system (112);
an asymmetric vision behavior database having behavioral actions for the asymmetric vision module (700); and
a number of interfaces (708) configured to interact with a number of components (104).

4. The apparatus of claim 3, wherein the asymmetric vision module (700) provides a number of different fields of view for a worksite environment (100) around the autonomous vehicle (102).

5. An apparatus of one of the preceding claims comprising:
a processor unit (702) configured to perform vision based positioning and navigation;
a behavior database configured to be accessed by the processor unit (702);
a system interface (316) coupled to the processor unit (702) and configured to interact with a navigation system (112); and
a number of asymmetric cameras (726).

6. The apparatus of claim 5, wherein the number of cameras (726) further comprises:
a first camera having a first field of view and a first image sensor; and
a second camera having a second field of view and a second image sensor, wherein the first field of view and the second field of view overlap to form a stereo vision region.

7. The apparatus of claim 5, wherein the first field of view and the second field of view are asymmetric.

8. The apparatus of claim 6, wherein the second image sensor has lower resolution than the first image sensor.

9. The apparatus of claim 6, wherein a resolution for the first camera and a resolution for the second camera is based on at least one of localization accuracy requirements for a given landmark distance, total field of view requirements for landmark localization, and the required distance resolution for the stereo vision region.

10. A method for robotic navigation, the method comprising:
receiving a task to complete in a worksite (100);
accessing a number of behaviors from a behavior database using a processor unit (204);
obtaining a number of images from a number of cameras (726) using the processor unit (204); and
performing the task using the number of behaviors and the number of images.

11. The method of claim 10, further comprising:
selecting a landmark navigation behavior;
obtaining a series of images using the number of cameras (726);
calculating a target location of a landmark in the series of images; and
maintaining the landmark in a range of pixels while moving relative to the landmark.

12. The method of claim 10, further comprising:
identifying a number of landmarks in the number of images;
obtaining position information for the number of landmarks;
calculating the position of an autonomous vehicle (102) based on the number of images and the number of landmarks to form a calculated position; and
performing the task using the calculated position.
